(19) **Europäisches Patentamt**
**European Patent Office**
**Office européen des brevets**

(11) **EP 2 405 517 B1**

(12) **EUROPEAN PATENT SPECIFICATION**

(45) Date of publication and mention
of the grant of the patent:
**13.08.2014 Bulletin 2014/33**

(51) Int Cl.:
*H01M 8/02* (2006.01)   *H01B 1/06* (2006.01)
*H01M 8/10* (2006.01)   *C08J 5/22* (2006.01)
*H01B 1/12* (2006.01)

(21) Application number: **10748789.4**

(22) Date of filing: **03.03.2010**

(86) International application number:
**PCT/JP2010/053463**

(87) International publication number:
**WO 2010/101195 (10.09.2010 Gazette 2010/36)**

(54) **FLUORINE-CONTAINING POLYMER ELECTROLYTE MEMBRANE**

FLUORHALTIGE POLYMER-ELEKTROLYT-MEMBRAN

MEMBRANE ÉLECTROLYTIQUE POLYMÈRE CONTENANT DU FLUOR

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **04.03.2009 JP 2009051226**

(43) Date of publication of application:
**11.01.2012 Bulletin 2012/02**

(60) Divisional application:
**14151622.9 / 2 722 921**

(73) Proprietor: **Asahi Kasei E-Materials Corporation**
**Chiyoda-ku**
**Tokyo 101-8101 (JP)**

(72) Inventors:
• **MIYAKE, Naoto**
**Tokyo 101-8101 (JP)**
• **YAMANE, Michiyo**
**Tokyo 101-8101 (JP)**

(74) Representative: **O'Brien, Simon Warwick et al**
**D Young & Co LLP**
**120 Holborn**
**London EC1N 2DY (GB)**

(56) References cited:
**EP-A1- 1 560 284      WO-A1-2004/030132**
**WO-A1-2008/072673    WO-A1-2008/102851**
**JP-A- 2004 247 182    JP-A- 2006 269 266**
**JP-A- 2007 328 916    JP-A- 2008 084 539**

**Description**

Technical Field

The present invention relates to a fluoropolymer electrolyte membrane.

Background Art

Fuel cells recover electrical energy directly transformed from chemical energy of a fuel by electrochemical oxidation of the fuel, such as hydrogen or methanol, in the cells, and they thus attract attention as a clean source of electrical energy. In particular, solid polymer electrolyte fuel cells are promising as alternative power sources for motor vehicles, domestic cogeneration systems, mobile phone batteries and the like, since they operate at a lower temperature than other types of fuel cell.

Such a solid polymer electrolyte fuel cell comprises at least a membrane electrode assembly where gas diffusion electrodes are joined onto both sides of a proton exchange membrane, the gas diffusion electrodes having a layered construction formed of an electrode catalyst layer (an anode catalyst layer or a cathode catalyst layer) and a gas diffusion layer. The proton exchange membrane used here refers to a polymer electrolyte membrane formed of a composition which has strongly acidic groups, such as sulfonic and/or carboxylic acid groups, in the polymer chain, and allows protons to permeate selectively therethrough. Examples of the composition used for such a proton exchange membrane include perfluoro proton exchange compositions typified by Nafion® (manufactured by DuPont) that are chemically stable and can be used suitably for proton exchange membranes.

When a fuel cell is operated, a fuel (e.g., hydrogen) is fed to the gas diffusion electrode on the anode side, while an oxidant (e.g., oxygen or air) is fed to the gas diffusion electrode on the cathode side. Both electrodes are then connected to an external circuit inbetween to effect operation of the fuel cell. Specifically, in the case where the fuel is hydrogen, it is oxidized on the anode catalyst within the anode catalyst layer to form protons. The protons pass through the proton conducting polymer within the anode catalyst layer, then migrate through the proton exchange membrane and pass through the proton conducting polymer within the cathode catalyst layer, leading onto the cathode catalyst within the latter layer. On the other hand, electrons produced concurrently with proton formation by oxidation of hydrogen pass through the external circuit, reaching the gas diffusion electrode on the cathode side. On the cathode catalyst within the cathode electrode layer, the protons described above and oxygen in the oxidant react together to form water. Thereafter, electrical energy is recovered.

During the operation, the proton exchange membrane is required to play a role as a gas barrier by having a reduced gas permeability. If the proton exchange membrane has a high gas permeability, leakage of hydrogen from the anode side to the cathode side as well as leakage of oxygen from the cathode side to the anode side, that is, cross leakage takes place. Occurrence of cross leakage results in the state of so-called chemical short circuit, making it unsuccessful to recover satisfactory voltage. In addition, there is a problem that subsequent reaction between hydrogen from the anode side and oxygen from the cathode side produces hydrogen peroxide which then degrades the proton exchange membrane.

On another front, thinning of proton exchange membranes as electrolyte is under study in order to reduce the internal resistance of the cells and thereby enhance the power output. However, thinning of proton exchange membranes results in a reduction in the effect thereof as gas barrier which makes the cross leakage problem more serious. Thinning of proton exchange membranes also results in a reduction in mechanical strength of the membranes themselves, which may present such problems that the membranes become difficult to handle when membrane electrode assemblies are produced or cells are constructed, or the membranes are broken due to dimensional change induced by uptake of water produced on the cathode side.

As a consequence, proton exchange membranes having a porous film filled with ion exchange resin have been proposed to solve these problems (see Patent Literatures 1 to 3).

To address a recent trend toward higher temperatures and lower humidities for the conditions under which fuel cells are operated, the internal resistance of the cells requires a further reduction, and for its purpose increasing the concentration of ion exchange groups in the ion exchange resins has been also proposed (see Patent Literature 4). However, a remarkable increase in the concentration of proton exchange groups in ion exchange resin causes, in parallel therewith, a remarkable increase in the water content of the proton exchange membrane by which the volume of the ion exchange resin itself is increased, posing a problem of its durability being significantly reduced. This problem tends to be more significant as the temperature and humidity for operation are increased, and therefore it may be a fatal problem under the recent operating conditions. In order to restrict the dimensional change of the membrane while keeping its own mechanical strength, a method of combining an ion exchange resin having an increased concentration of ionic groups with a conventional fluorinated porous membrane has been proposed (see Patent Literature 5).

Citation List

Patent Literature

> Patent Literature 1: JP-B-5-75835
> Patent Literature 2: JP-B-7-68377
> Patent Literature 3: JP-A-2001-503909
> Patent Literature 4: WO 2007/013532
> Patent Literature 5: WO 2008/072673

Summary of Invention

Technical Problem

However, it is difficult for any of the proton exchange membranes disclosed in Patent Literatures 1 to 3 to maintain their performance during operation under conditions of high temperature and low humidity. Thus, in view of the improvement of the performance of the proton exchange membrane, it is still susceptible to improvement. In addition, it is difficult for any of the proton exchange membranes disclosed in Patent Literatures 4 and 5 to endure repeated dimensional change. Thus, in view of the improvement of the durability of the proton exchange membrane, it is still susceptible to improvement.

Under the aforementioned circumstances, it is an object of the present invention to provide a fluoropolymer electrolyte membrane having excellent performance under conditions of high temperature and low humidity and also having excellent durability.

Solution to Problem

The present inventors have conducted intensive studies directed towards achieving the aforementioned object. As a result, the inventors have found that a fluoropolymer electrolyte membrane, which maintains high performance under conditions of high temperature and low humidity, suppresses dimensional change ratio in water at 80°C, and is excellent in terms of durability, can be produced by combining a specific fluoropolymer electrolyte with a microporous film, thereby completing the present invention.

Specifically, the present invention is as defined in claim 1.

[1] A fluoropolymer electrolyte membrane comprising a fluoropolymer electrolyte having an ion exchange capacity of 1.3 to 3.0 meq/g in a pore of a microporous film.

[2] The fluoropolymer electrolyte membrane according to [1] above, wherein its dimensional change ratio (a plane direction/a membrane thickness direction) in water at 80°C is 0.50 or less.

[3] The fluoropolymer electrolyte membrane according to [1] or [2] above, wherein the fluoropolymer electrolyte is a copolymer comprising a repeating unit represented by following general formula (1) and a repeating unit represented by following general formula (2), the formulas (1) and (2) being as follows:

$$-(CF_2CF_2)- \qquad (1)$$

$$-(CF_2-CF(-O-(CF_2CFX)_n-O_p-(CF_2)_m-SO_3H)) \qquad (2)$$

wherein, X represents a fluorine atom or a $-CF_3$ group; n represents an integer of 0 to 1, m represents an integer of 0 to 12, and p represents 0 or 1, provided that a combination of n = 0 and m = 0 is excluded.

[4] The fluoropolymer electrolyte membrane according to any one of [1] to [3] above, wherein the microporous film has a multilayer structure.

[5] The fluoropolymer electrolyte membrane according to any one of [1] to [3] above, wherein the microporous film has an elastic modulus of at least one direction of MD and TD of 250 MPa or less.

[6] The fluoropolymer electrolyte membrane according to any one of [1] to [3] above, wherein the microporous film has a multilayer structure and an elastic modulus of at least one direction of MD and TD of 250 MPa or less.

[7] The fluoropolymer electrolyte membrane according to any one of [1] to [6] above, wherein the microporous film is made of polyolefin.

[8] The fluoropolymer electrolyte membrane according to any one of [1] to [7] above, wherein the fluoropolymer electrolyte has a water content of 30% by mass to 300% by mass at 80°C.

[9] A membrane electrode assembly (MEA) comprising the fluoropolymer electrolyte membrane according to any one of [1] to [8] above.

[10] A fuel cell comprising the fluoropolymer electrolyte membrane according to any one of [1] to [8] above.

Advantageous Effects of Invention

According to the present invention, there can be provided a fluoropolymer electrolyte membrane, which has excellent performance during operation under conditions of high temperature and low humidity, and also has excellent durability.

Description of Embodiments

Embodiments for carrying out the present invention (hereinafter simply referred to as "the present embodiments") will be described below in detail. The present invention, however, is not limited to the present embodiments described below, but can be carried out in the form of different variants within the scope of its gist.

The polymer electrolyte membrane in the present embodiments is a fluoropolymer electrolyte membrane (hereinafter shortly referred to as a "polymer electrolyte membrane" occasionally) comprising a fluoropolymer electrolyte having an ion exchange capacity of 1.3 to 3.0 meq/g in pores of a microporous film.

Fluoropolymer electrolyte

The fluoropolymer electrolyte according to the present embodiments (hereinafter shortly referred to as a "polymer electrolyte" occasionally) is not particularly limited. It is preferably a copolymer comprising repeating units represented by the following general formula (1) and repeating units represented by the following general formula (2), the formulas (1) and (2) being as follows:

$$-(CF_2CF_2))- \qquad (1)$$

$$-(CF_2-CF(-O-(CF_2CFX)_n-O_p-(CF_2)_m-SO_3H)) \qquad (2)$$

wherein in the formula (2), X represents a fluorine atom or a $-CF_3$ group; n represents an integer of 0 to 5, m represents an integer of 0 to 12, and p represents 0 or 1, provided that a combination of n = 0 and m = 0 is excluded.

The fluoropolymer electrolyte according to the present embodiments is obtained, for instance, by synthesis of a precursor polymer followed by alkaline hydrolysis, acidic decomposition and the like of the precursor polymer. As an example, the polymer having repeating units represented by the general formulas (1) and (2) is obtained, for instance, by formation of a precursor polymer having repeating units represented by the general formula (3) through polymerization, followed by alkaline hydrolysis, acid treatment and the like of the precursor polymer, the formula (3) being as follows:

$$-[CF_2CF_2]_a-[CF_2-CF(-O-(CF_2CFX)_n-O_p-(CF_2)_m-A)]\ g- \qquad (3)$$

wherein in the formula (3), X represents a fluorine atom or a $-CF_3$ group; n represents an integer of 0 to 5, m represents an integer of 0 to 12, and p represents 0 or 1, provided that a combination of n = 0 and m = 0 is excluded; and A represents $COOR^1$, $COR^2$ or $SO_2R^2$ where $R^1$ represents an alkyl group having 1 to 3 carbon atoms and $R^2$ represents a halogen atom.

The foregoing precursor polymer is produced, for instance, by copolymerization of a fluorinated olefinic compound with a fluorinated vinyl compound.

The fluorinated olefinic compound here includes, for example, tetrafluoroethylene, hexafluoropropylene, trifluoroethylene, monochlorotrifluoroethylene, perfluorobutylethylene ($C_4F_9CH=CH_2$), perfluorohexaethylene ($C_6F_{13}CH=CH_2$) and perfluorooctaethylene ($C_6F_{17}CH=CH_2$). These may be used alone or in combination of two or more thereof.

The fluorinated vinyl compound, on the other hand, includes, for example, those represented by the general formulas listed as follows: $CF_2=CFO(CF_2)_q-SO_2F$, $CF_2=CFOCF_2CF(CF_3)O(CF_3)_q-SO_2F$, $CF_2=CF(CF_2)_q-SO_2F$, $CF_2=CF(OCF_2CF(CF_3))q- (CF_2)_{q-1}-SO_2F$, $CF_2=CFO(CF_2)_q-CO_2R^9$, $CF_2=CFOCF_2CF(CF_3)O(CF_2)_q-CO_2R^9$, $CF_2=CF(CF_2)_q-CO_2R^9$ and $CF_2=CF(OCF_2CF(CF_3))_q- (CF_2)_2-CO_2R^9$, where q is an integer of 1 to 8, and $R^9$ denotes an alkyl group having 1 to 3 carbon atoms.

The foregoing precursor polymer can be synthesized by known types of copolymerization process. Such synthetic processes include, but not particularly limited to, processes presented below.

(i) A process of reacting a fluorinated vinyl compound and a fluorinated olefinic compound, both of which are normally gaseous, for polymerization in solution after the compounds are charged into a polymerization solvent used here such as a fluorinated hydrocarbon to make a solution (solution polymerization). The fluorinated hydrocarbon suitable in use is selected from a group of compounds generically called "chlorofluorocarbons" such as, for example, trichlorotrifluoroethane and 1,1,1,2,3,4,4,5,5,5-decafluoropentane.

(ii) A process of reacting a fluorinated vinyl compound and a fluorinated olefinic compound, both of which are normally gaseous, for polymerization without a solvent such as a fluorinated hydrocarbon where the fluorinated vinyl compound also serves as a solvent (bulk polymerization).

(iii) A process of reacting a fluorinated vinyl compound and a fluorinated olefinic compound, both of which are normally gaseous, for polymerization in solution after the compounds are charged into an aqueous solution of a surfactant used as a polymerization solvent to make a solution (emulsion polymerization).

(iv) A process of reacting a fluorinated vinyl compound and a fluorinated olefinic compound, both of which are normally gaseous, for polymerization in emulsion after the compounds are charged into an aqueous solution used here containing a surfactant and an auxiliary emulsifier such as an alcohol to make an emulsion (mini-emulsion polymerization or micro-emulsion polymerization).

(v) A process of reacting a fluorinated vinyl compound and a fluorinated olefinic compound, both of which are normally gaseous, for polymerization in suspension after the compounds are charged into an aqueous solution used here containing a suspension stabilizer to make a suspension (suspension polymerization).

In the present embodiments, the polymerization degree of the precursor polymer can be indicated by use of melt mass flow rate (abbreviated as "MFR" hereinafter). In the present embodiments, the precursor polymer preferably has an MFR of 0.01 g/10 min or more, more preferably, 0.1 g/10 min or more, and yet more preferably, 0.3 g/10 min or more, particularly preferably, 1 g/10 min or more. The MFR has not a particular upper limit, but it is preferably 100 g/10 min or less, more preferably, 50 g/10 min or less, yet more preferably, 10 g/10 min or less, and particularly preferably, 5 g/10 or less. Control of the MFR in a range of 0.01 - 100 g/10 min tends to be capable of better processing such as film formation of the polymer. The MFR of the precursor polymer used here is measured according to JIS K-7210. Specifically, an instrument with an orifice 2.09 mm in inner diameter and a length of 8 mm is used to measure the melt flow rate of fluorinated ion exchange resin precursors at a load of 2.16 kg and a temperature of 270°C, which is expressed as MFR (g/10 min) of the precursor polymer.

A precursor polymer prepared as described above may be subjected, for instance, to hydrolysis in a reactive basic liquid, subsequent adequate washing with warm water and then final acid treatment. The acid treatment protonates the precursor polymer to provide a polymeric perfluorocarbon compound. For instance, a precursor polymer for perfluorocarbon sulfonic acid resin is protonated to form the perfluorocarbon sulfonic acid resin.

The polymer electrolyte according to the present embodiments preferably has a content of 100 mass% based on the total mass of polymers used as fluoropolymer electrolytes in terms of chemical durability, but a hydrocarbon polymer electrolyte and the like may be contained therein at any proportion. The hydrocarbon polymer electrolyte includes, for example, polyphenylene sulfide, polyphenylene ether, polysulfone, polyethersulfone, polyetherethersulfone, polyetherketone, polyetheretherketone, polythioetherethersulfone, polythioetherketone, polythioetheretherketone, polybenzimidazole, polybenzoxazole, polyoxadiazole, polybenzoxazinone, polyxylylene, polyphenylene, polythiophene, polypyrrole, polyaniline, polyacene, polycyanogen, polynaphthylidine, polyphenylene sulfide sulfone, polyphenylene sulfone, polyimide, polyetherimide, polyesterimide, polyamideimide, polyarylate, aromatic polyamide, polystyrene, polyester and polycarbonate. The hydrocarbon polymer electrolyte preferably has a content of 50 mass% or less based on the total mass of the polymer electrolytes, more preferably, 20 mass% or less, and yet more preferably, 10 mass% or less.

The fluoropolymer electrolyte according to the present embodiments preferably has an ion exchange capacity of 1.3 to 3.0 meq/g. The ion exchange capacity of 3.0 meq/g or less provides a lower swelling of a polymer electrolyte membrane containing this polymer electrolyte under the operation conditions of the fuel cell (such as at a high temperature and an increased humidity). A lower swelling of the polymer electrolyte membrane is beneficial to improve such problems of durability as a reduced strength and/or creasing of the polymer electrolyte membrane, resulting in detachment from the electrode and the like, as well as a decreased gas barrier performance. On the other hand, the ion exchange capacity of 1.3 meq/g or more is able to keep a good capacity of power generation for a fuel cell even under a high temperature and a decreased humidity comprising a polymer electrolyte membrane satisfying this requirement. In view of these, the ion exchange capacity of the fluoropolymer electrolyte is preferably 1.4 to 3.3 meq/g, more preferably 1.5 to 2.9 meq/g, and yet more preferably 1.7 to 2.5 meq/g.

As to ion exchange capacity, it is measured as describe below for the fluoropolymer electrolytes in the present embodiments. First, a polymer electrolyte membrane in the state of a proton as counter ion of the exchange group is immersed in a saturated aqueous solution of NaCl at 25°C which is then stirred for a sufficient time. Next, protons present in the saturated aqueous solution of NaCl are titrated with an aqueous solution of 0.01 N NaOH for neutralization. After neutralization, the mixture is filtered to obtain the polymer electrolyte membrane in the state of a sodium ion as counter ion of the exchange group. The membrane is rinsed with pure water, dried in vacuo, and weighed. When the amount of sodium hydroxide consumed for neutralization is expressed as M (mmol/l), and the mass of the polymer electrolyte membrane, which has a sodium ion as counter ion of the exchange group, is expressed as W (mg), the equivalent mass EW (g/equivalent) is determined by the following equation.

$$EW = (W/M) - 22$$

Then, the ion exchange capacity (meq/g) is calculated by converting the determined EW value into the inverse number and multiplying the inverse number by 1,000.

The ion exchange capacity is adjusted into the foregoing numerical range by controlling the number of ion exchange groups present in 1 g of the fluoropolymer electrolyte.

In view of durability during operation of the fuel cell, the fluoropolymer electrolyte membrane according to the present embodiments preferably has a glass transition temperature of 80°C or more, more preferably 100°C or more, yet more preferably 120°C or more, and particularly preferably 130°C or more.

The glass transition temperatures of fluoropolymer electrolytes membrane are measured according to JIS-C-6481. Specifically, a film formed from a fluoropolymer electrolyte membrane is cut to provide a test piece of 5 mm in width. The test piece is heated from room temperature at a rate of 2 °C/min using a dynamic mechanical analyzer to measure dynamic viscoelasticity and loss tangent for the test piece in the analyzer and the temperature where loss tangent measured has a peak value is the glass transition temperature. The glass transition temperature is adjusted by controlling the structural formula, molecular weight, ion exchange capacity, etc. of the fluoropolymer electrolyte.

The fluoropolymer electrolyte according to the present embodiments preferably has a water content of 30% by mass to 330% by mass at 80°C, more preferably 70% by mass to 280% by mass, yet more preferably 120% by mass to 255% by mass, and particularly preferably 160% by mass to 220% by mass. Adjustment of the water content into the above range for the fluoropolymer electrolyte tends to be effective in achieving a long-term stability against dimensional change, developing a high cell performance under the conditions of higher temperatures and lower humidities, and so forth. The water content of 30% by mass or more at 80°C tends to allow fuel cells made from the polymer electrolyte to develop a high cell performance since there is a sufficient amount of water for proton transfer. On the other hand, the water content of 330% by mass or less at 80°C prevents possible gelation of the fluoropolymer electrolyte to a negligible extent and thereby tends to facilitate film formation therefrom.

The water content of the fluoropolymer electrolyte at 80°C can be adjusted into the range described above by controlling the molecular weight, MFR, crystallinity and ion exchange capacity of the polymer electrolyte, as well as the hydrophilically treated surface area of the microporous film described later, the temperature and time for heat treatment of the polymer electrolyte membrane, and the like. Measures for increasing the water content at 80°C include, for example, increasing the density of the ion exchange groups for the polymer electrolyte, increasing the MFR of the precursor polymer for the polymer electrolyte, decreasing the temperature and/or time for heat treatment to restrict crystallization of the polymer electrolyte, and modifying hydrophilically the surface of the microporous film described later. On the other hand, measures for decreasing the water content at 80°C include, for example, decreasing the density of the ion exchange groups for the polymer electrolyte, decreasing the MFR of the precursor polymer for the polymer electrolyte, and crosslinking the polymer electrolyte membrane by electron beam or the like.

Microporous film

The raw material of the microporous film according to the present embodiments is not particularly limited. Examples of the raw material of the microporous film include polytetrafluoroethylene, polyamide, polyimide, polyolefin, and polycarbonate. These raw materials may be used as a single material or a mixture thereof. In view of ease of formation into microporous film and handling ability, polyolefin is preferably used as a raw material.

For the microporous film according to the present embodiments, the polyolefin resin as raw material is preferably a polymer including propylene or ethylene as major monomer component. The polyolefin resin may contain only the major monomer component, but also contain another monomer component such as butene, pentene, hexene and 4-methylpentene.

Specific examples of the polyolefin resin includes polyethylenes, such as ultrahigh molecular weight polyethylene (UHMWPE), high density polyethylene (HDPE), medium density polyethylene, low density polyethylene (LDPE), linear low density polyethylene and ultralow density polyethylene produced by using a Ziegler-type multisite catalysts, polypropylene, ethylene - vinyl acetate copolymer, ethylenic copolymer produced by using a single-site catalyst, and copolymers of propylene and a different monomer(s) copolymerizable therewith (propylene - ethylene copolymer, propylene - ethylene - $\alpha$-olefin copolymer, etc.), as a single material or a mixture. Of all these, polyethylene is preferred, ultrahigh molecular weight polyethylene and high density polyethylene more preferred, and ultrahigh molecular weight polyethylene still more preferred, in view of ease of formation into microporous film. The ultrahigh molecular weight polyethylene preferably has a weight-average molecular weight of $1 \times 10^5$ or more, more preferably $3 \times 10^5$ or more, and yet more preferably $5 \times 10^5$ or more, particularly preferably $5 \times 10^5$ to $15 \times 10^6$ in view of ease of formation into microporous film and physical properties (mechanical strength, porosity, film thickness) thereof. In view of heat resistance, polypropylene is preferred.

In addition, the polyolefin microporous film according to the present embodiments may contain known additives, if necessary, including a metal soap such as potassium stearate or zinc stearate, a UV absorber, a light stabilizer, an antistatic agent, an anticlouding agent, and a coloring pigment, within such ranges as keep the effect of the present invention to achieve the subject thereof.

The microporous film according to the present embodiments preferably has a multilayer structure. By the multilayer structure is meant a pie dough-shaped multilayer structure where resin layers and air layers are stacked alternately in the thickness direction. That is, since the microporous film has a multilayer structure like a pie dough where multiple layers such as two, three, four or more layers are arranged one after another, it is different from any conventional microporous film having a three-dimensional network structure. Use of a microporous film having such a multilayer structure enables the polymer electrolyte membrane to become much higher in stability against dimensional change and mechanical strength, compared to use of a conventional microporous film having a three-dimensional network structure. The term "air layer" refers to a space between adjacent resin layers (between pie dough layers) in the film thickness direction.

By using a microporous film having a multilayer structure, a mechanism which further improves a polymer electrolyte membrane for stability against dimensional change and mechanical strength is believed as follows. Degradation of a polymer electrolyte is generally believed to occur through attack of the polymer electrolyte by hydroxy radicals formed during fuel cell operation and resultant decomposition of the polymer electrolyte. The polymer electrolyte with microscale regions of decomposition then undergoes a larger-scale decomposition (pinholes, etc. of the membrane) by dimensional change of the polymer electrolyte membrane associated with starts and stops of the fuel cell and further attacks with hydroxy radicals, leading to spreading of the degraded regions. Generally, it is believed that a polymer electrolyte filled in a microporous film is able to stop spreading of the degraded regions at its interface with the microporous film part, but if the polymer electrolyte has a high water content, stress induced by volume change of the greatly expanded polymer electrolyte may cause creep deformation of the microporous film at some locations thereof, in spite of its stress resistance. In the case of a single layer-structured porous film, its restrictive effect on dimensional change is then reduced at the locations of creep deformation to accelerate degradation of the polymer electrolyte membrane and decrease its mechanical strength, possibly resulting in a lower durability. In contrast, in the case of a multilayer-structured microporous film, stress induced by volume change of the polymer electrolyte can be properly dissipated, though the detail is not clear. By the above assumed mechanism, a higher durability can be obtained by combining a microporous film having a multilayer structure with the fluoropolymer electrolyte of the present embodiments.

Such a microporous film having a pie dough-shaped multilayer structure, where resin layers and air layers are stacked alternately in the thickness direction, when the raw material is polyolefin resin, can be produced through formation of substantially gelled film and stretching of resultant gelled sheet, as by a production process thereof described in JP-A-2-232242. For instance, organic or inorganic particles are dispersed in a suitable gelling solvent using a milling apparatus or the like, and charged with a polyolefin resin as binder and the remaining portion of the suitable gelling solvent, and then the resulting mixture is heated to dissolve the polyolefin in the solvent for sol formation. The resultant sol composition is formed into a tape form at or above the gelling temperature, and the tape-form material is then cooled rapidly at or below the gelling temperature to make a gelled sheet. The gelled sheet can be stretched uniaxially or biaxially at or above the glass transition temperature of the polyolefin resin and then fixed thermally to produce the polyolefin microporous film having a multilayer structure. Examples of the gelling solvent include typically decalin (decahydronaphthalene), xylene, hexane and paraffin when the polyolefin resin is polyethylene. The gelling solvent may be a mixture of two or more solvents.

The air layer of the microporous film according to the present embodiments preferably has an interlayer spacing of 0.01 $\mu$m to 20 $\mu$m in view of retentivity of interlayer spacing and formability. The air layer has an interlayer spacing more preferably of 0.01 $\mu$m to 10 $\mu$m, yet more preferably of 0.05 $\mu$m to 5 $\mu$m, and particularly preferably of 0.1 $\mu$m to 3 $\mu$m. Control of the interlayer spacing of the air layer in the above range tends to be further remarkably effective for achievement of high filling of the polymer electrolyte and of stability against dimensional change of the polymer electrolyte membrane. The interlayer spacing of the air layer here can be observed in a sectional micrograph by scanning electron microscopy (SEM).

Moreover, the microporous film according to the present embodiments preferably has an elastic modulus of at least one direction of MD and TD of 250 MPa or less, and more preferably has an elastic modulus of both of the directions of MD and TD of 250 MPa or less. By setting the elastic modulus of the microporous film at 250 MPa or less, the dimensional stability of the polymer electrolyte membrane tends to be further improved. The elastic modulus of a microporous film herein means a value measured according to JIS-K7127.

It is to be noted that "MD" means the length direction of the microporous film or the direction of discharging a material resin during film formation, and that "TD" means the width direction of the microporous film.

The fluoropolymer electrolyte absorbs water and an ion exchange group is hydrated, so that proton conduction in the fluoropolymer electrolyte can be achieved. Accordingly, as the density of the ion exchange groups is increased and thus the ion exchange capacity is also increased, the conductivity becomes higher at the same humidity. Moreover, as the humidity is increased, the conductivity becomes higher.

Since the fluoropolymer electrolyte according to the present embodiments has a structure with a high density of sulfone groups, it exhibits a high conductivity even at a low humidity. At the same time, the fluoropolymer electrolyte according to the present embodiments is problematic in that it excessively absorbs water at a high humidity. For example, in the operation of a household fuel cell, activation and termination are generally carried out one or more times per day. The polymer electrolyte membrane repeatedly swells and contracts due to humidity change occurring over that period of time. The dimensional change of the polymer electrolyte, which repeatedly occurs due to such drying and wetting conditions, is disadvantageous in terms of both performance and durability. Since the fluoropolymer electrolyte according to the present embodiments has a high ion exchange capacity, it easily absorbs water. Thus, if a membrane is formed as it is, the degree of dimensional change due to drying and wetting conditions becomes high. The present embodiments make it possible to decrease the dimensional change of the electrolyte membrane by combining the fluoropolymer electrolyte having a high ion exchange capacity with a microporous film. In particular, using a flexible microporous film having an elastic modulus of 250 MPa or less, the stress caused by the volume change of the membrane can be alleviated due to the flexibility of the microporous film, and the degree of dimensional change can be further suppressed. However, if the elastic modulus of the microporous film is too small, the strength of the membrane tends to be decreased.

From the above described viewpoint, the elastic modulus of the microporous film is more preferably 1 to 250 MPa, further preferably 5 to 200 MPa, and particularly preferably 30 to 150 MPa.

The microporous film according to the present embodiments preferably has a porosity of 50% to 90%, more preferably 60% to 90%, yet more preferably 60% to 85%, and particularly preferably 50% to 85%. The range of porosity from 50% to 90% tends to be further remarkably effective for a higher ion conductivity of the polymer electrolyte membrane as well as a higher strength and a smaller dimensional change. As used here, the porosity of the microporous film refers to a value measured using a mercury porosimeter (e.g., trade name: Autopore IV 9520; initial pressure of about 20 kPa, manufactured by Shimadzu Corporation) based on the mercury penetration method.

The porosity of the microporous film can be adjusted in the above numerical range by the pore count, pore size, pore shape, stretch ratio, loaded amount of a gelling agent and type of the gelling agent. When the microporous film is composed of polyolefin resin, measures for raising the porosity of the polyolefin microporous film include, for example, regulating the loaded amount of a gelling agent in a range of 30 to 80 mass%. Regulation of the loaded amount of a gelling agent in this range imparts a good plasticizing effect while keeping the formability of the polyolefin resin, and therefore the lamellar crystals of the polyolefin resin can be stretched efficiently to increase the stretch ratio. On the other hand, measures for lowering the porosity of the polyolefin microporous film include, for example, decreasing the loaded amount of a gelling agent and decreasing the stretch ratio.

The microporous film according to the present embodiments preferably has a thickness of 0.1 $\mu$m to 50 $\mu$m, more preferably 0.5 $\mu$m to 30 $\mu$m, yet more preferably 1.0 $\mu$m to 20 $\mu$m, and particularly preferably 2.0 $\mu$m to 20 $\mu$m. Control of the film thickness in the range of 0.1 $\mu$m to 50 $\mu$m tends to provide easy filling of the polymer electrolyte into the pores of the microporous film as well as further restriction in dimensional change of the polymer electrolyte film. The thickness of the microporous film described here refers to a value measured using a known film thickness meter (e.g., trade name "B-1" manufactured by Toyo Seiki Seisaku-sho) for the film after it is placed at rest for a sufficient time in a thermo-hygrostat of 50% RH.

The thickness of the microporous film can be controlled in the above numerical range by solid content of the casting solution, extruded amount of the resin, extrusion speed, and stretch ratio for the microporous film.

The microporous film according to the present embodiments preferably has a pore size (pore) of 0.03 $\mu$m to 10 $\mu$m, more preferably 0.1 $\mu$m to 10 $\mu$m, yet more preferably 0.3 $\mu$m to 5 $\mu$m, and particularly preferably 0.5 $\mu$m to 3 $\mu$m. Control of the pore size in the range of 0.03 $\mu$m to 10 $\mu$m tends to provide easy filling of the polymer electrolyte into the pores of the microporous film as well as difficult escape thereof from the pores. The pore size of the microporous film described here is expressed as a median size (by volume) and refers to a value measured using a mercury porosimeter (e.g., trade name: Autopore IV 9520, manufactured by Shimadzu Corporation) based on the mercury penetration method.

The pore size of the microporous film can be controlled in the above numerical range by dispersibility of the plasticizer, stretch ratio for the polyolefin microporous film, dose of radiation and time of exposure thereto, and solvent and time for extraction of the plasticizer.

Preferably, the microporous film according to the present embodiments may be further subjected to thermal fixation to reduce shrinkage. The thermal fixation can reduce shrinkage of the microporous film in a hot atmosphere, and thus further reduce dimensional change of the polymer electrolyte membrane. The thermal fixation of the microporous film is carried out using, for example, a TD tenter in a temperature range of 100 to 135°C to relax the stress in the TD direction.

Furthermore, the microporous film according to the present embodiments may be subjected to surface treatment, if necessary, such as exposure to electron beam, exposure to plasma, coating of a surfactant, and chemical modification, within such limits as keep the effect of the present invention to achieve the subject thereof. Surface treatment is effective to impart hydrophilicity to the surface of the microporous film and fill in a solution of the polymer electrolyte to a high degree, as well as it is able to adjust the water content of the polymer electrolyte membrane.

Fluoropolymer Electrolyte Membrane

The fluoropolymer electrolyte membrane of the present embodiments comprises, in pores of a microporous film, a fluoropolymer electrolyte having an ion exchange capacity that is adjusted to fall within a specific range. The polymer electrolyte membrane may contain such additives as a polyazole compound and a thioether compound to improve the durability, in addition to the foregoing polymer electrolyte and microporous film.

These respective additives can be used alone or in combination of two or more.

(Polyazole Compound)

The polyazole compound according to the present embodiments includes, for example, polyimidazole compounds, polybenzimidazole compounds, polybenzbis(imidazole) compounds, polybenzoxazole compounds, polyoxazole compounds, polythiazole compounds, and polybenzthiazole compounds, that is, polymers of compounds having a five-membered heterocyclic ring(s) as a constituent, containing at least one nitrogen atom therein. These five-membered heterocyclic rings may contain an oxygen atom, a sulfur atom, etc. in addition to a nitrogen atom.

The polyazole compound preferably has a molecular weight of 300 to 500,000 (in terms of polystyrene) as weight-average molecular weight by GPC.

The foregoing compound having a five-membered heterocyclic ring(s) as a constituent should be a compound having a five-membered heterocyclic ring bound to a divalent aromatic group represented, for example, by a p-phenylene group, a m-phenylene group, a naphthalene group, a diphenylene ether group, a diphenylene sulfone group, a biphenylene group, a terphenyl group, or a 2,2-bis(4-carboxyphenylene)hexafluoropropane group, since such a compound is preferably used in view of heat resistance. Specifically, polybenzimidazoles are preferably used as polyazole compound.

Moreover, the polyazole compound may be a modified compound having ion exchange groups incorporated therein (a modified polyazole compound) using common modification methods described below. Such modified polyazole compounds include those having at least one type of groups incorporated therein that is selected from the group consisting of amino groups, quaternary ammonium groups, carboxyl groups, sulfonic acid groups, and phosphonic acid groups. Incorporation of such anionic ion exchange groups into the polyazole compound can increase the overall ion exchange capacity of the polymer electrolyte membrane according to the present embodiments, resulting in a higher power output during fuel cell operation. The modified polyazole compounds preferably have an ion exchange capacity of 0.1 to 3.5 meq/g.

The modification methods for a polyazole compound include, for example, but not particularly limited to, incorporation of ion exchange groups into the polyazole compound using fuming sulfuric acid, concentrated sulfuric acid, anhydrous sulfuric acid or a complex thereof, a sulltone such as propane sultone, $\alpha$-bromotoluenesulfonic acid, a chloroalkylsulfonic acid or the like; and incorporation of an ion exchange group into a monomer for the polyazole compound during its synthesis, followed by polymerization.

Preferably, the polyazole compound, in view of durability, is suitably dispersed like islands within the phase of the polymer electrolyte. The term "dispersed like islands" means a state where the phase containing the polyazole compound is dispersed like particles within the phase of the polymer electrolyte, as the phases were observed without staining. The dispersion in such a state indicates that the polyazole compound-based region is finely dispersed in the polymer electrolyte-based region.

Furthermore, the polymer electrolyte and the polyazole compound may be, for instance, in the form of acid-base ion complex formed by ionic bonding, or bound covalently to each other. Specifically, if the polymer electrolyte has sulfonic acid groups and the polyazole compound has reactive groups such as imidazole, oxazole or thiazole groups, for example, the sulfonic acid groups of the polymer electrolyte and nitrogen atoms contained in the reactive groups of the polyazole compound may be bound to each other through ionic bonds or covalent bonds.

The presence or absence of the ionic bonds or covalent bonds can be confirmed using a Fourier-transform infrared spectrometer (referred to as FT-IR hereinafter). For instance, when a perfluorocarbon sulfonic acid resin and poly[2,2'-(m-phenylene)-5,5'-benzimidazole] (referred to as "PBI" hereinafter) are used as the polymer electrolyte and the polyazole compound, respectively, FT-IR measurement indicates absorption peaks observed at about 1458 cm$^{-1}$, about 1567 cm$^{-1}$ and about 1634 cm$^{-1}$, which are shifted by chemical bonding between the sulfonic acid groups of the polymer electrolyte and the imidazole groups of PBI.

In addition, when a polymer electrolyte membrane loaded with PBI is made and tested for dynamic viscoelasticity, loss tangent (tan $\delta$) obtained in the course of temperature rise from room temperature to 200°C has a higher peak temperature (Tg) than the polymer electrolyte membrane free of PBI. Such a higher Tg is preferred since it can provide improvements in heat resistance and mechanical strength of polymer electrolyte membranes.

(Thioether Compound)

The thioether compound according to the present embodiments is a compound having a chemical structure: -(R-S)$_r$- where S is a sulfur atom, R is a hydrocarbon group, and r is an integer of at least 1. Specific examples of compounds having this chemical structure include dialkyl thioethers such as dimethyl thioether, diethyl thioether, dipropyl thioether, methyl ethyl thioether and methyl butyl thioether; cyclic thioethers such as tetrahydrothiphene and tetrahydroapyran; and aromatic thioethers such as methyl phenyl sulfide, ethyl phenyl sulfide, diphenyl sulfide and dibenzyl sulfide. The thioether compound used herein may be a thioether compound itself exemplified above, or a polymer from an exemplified thioether compound used as a monomer, such as polyphenylene sulfide (PPS), for example.

Preferably, the thioether compound is a polymer with r of at least 10 (oligomer or polymer), and more preferably, a polymer with r of at least 1,000 in view of durability. A particularly preferable thioether compound is polyphenylene sulfide (PPS).

Now, polyphenylene sulfide will be described below. The polyphenylene sulfide preferably used in the present embodiments is a polyphenylene sulfide containing a paraphenylene sulfide skeleton, preferably at 70 mol% or more, and more preferably at 90 mol% or more.

The method of producing the polyphenylene sulfide includes, for example, but not particularly limited to, polymerization of a halogenated aromatic compound (p-dichlorobenzene etc.) in the presence of sulfur and sodium carbonate; polymerization of a halogenated aromatic compound with sodium sulfide or sodium hydrosulfide in a polar solvent in the presence of sodium hydroxide; polymerization of a halogenated aromatic compound with hydrogen sulfide in a polar solvent in the presence of sodium hydroxide or sodium aminoalkanoate; and self-condensation of p-chlorothiophenol. Above all, the method of reacting p-dichlorobenzene with sodium sulfide in an amide solvent such as N-methylpyrrolidone or dimethyl acetamide, or in a sulfolane solvent such as sulfolane is suitably used.

The polyphenylene sulfide typically has a content of -SX groups (S is a sulfur atom, and X is an alkaline metal atom or a hydrogen atom), preferably of 10 $\mu$mol/g - 10,000 $\mu$mol/g, more preferably of 15 $\mu$mol/g - 10,000 $\mu$mol/g, and yet more preferably of 20 $\mu$mol/g - 10,000 $\mu$mol/g. The above range for a content of -SX groups means that many active sites are present therein. Use of the polyphenylene sulfide satisfying the above range for a content by concentration of -SX groups is believed to provide a higher compatibility with the polymer electrolyte according to the present embodiments, thus a higher dispersibility, and thereby a higher durability of the formed polymer electrolyte membrane under conditions of high temperature and low humidity.

In addition, the thioether compound that can be used suitably also includes those having an acidic functional group incorporated at its end(s). The acidic functional group thus incorporated is preferably selected from the group consisting of a sulfonic acid group, a phosphoric acid group, a carboxylic acid group, a maleic acid group, a maleic anhydride group, a fumaric acid group, an itaconic acid group, an acrylic acid group and a methacrylic acid group, and above all, a sulfonic acid group is especially preferred.

Incorporation of the acidic functional group is not particularly limited, but performed by common methods. For instance, incorporation of a sulfonic acid group into a thioether compound can be performed using a sulfonation agent such as anhydrous sulfuric acid or fuming sulfuric acid under known conditions. More specifically, it can be incorporated, for example, under conditions as described in K. Hu, T. Xu, W. Yang, Y. Fu, Journal of Applied Polymer Science, Vol. 91, or E. Montoneri, Journal of Polymer Science: Part A: Polymer Chemistry, Vol. 27, 3043-3051 (1989).

Furthermore, the thioether compound that is used suitably also includes those which the acidic functional group incorporated is further replaced by a metal salt or amine salt thereof. A preferable metal salt is an alkali metal salt such as a sodium or potassium salt, or an alkaline earth metal salt such as a calcium salt.

When the thioether compound is used in the form of powder, the thioether compound preferably has an average particle size of 0.01 $\mu$m - 2.0 $\mu$m, more preferably 0.01 $\mu$m - 1.0 $\mu$m, yet more preferably 0.01 $\mu$m - 0.5 $\mu$m, and particularly preferably 0.01 $\mu$m - 0.1 $\mu$m, considering that it can provide a higher dispersibility in the polymer electrolyte and achieve good effects of a longer service life and the like. The average particle size is a measurement by a laser diffraction/scatter-mode particle size distribution analyzer (e.g., type LA-950, manufactured by Horiba).

Methods of finely dispersing the thioether compound in the polymer electrolyte are, for example, a method of milling and finely dispersing the thioether compound by applying a high shear in melt mixing thereof with the polymer electrolyte etc.; a method of providing a solution of the polymer electrolyte described later, then filtering the solution to remove large particles of the thioether compound, and using the solution after filtration; and others. A thioether compound used suitably for melt mixing preferably has a melt viscosity of 1 - 10,000 poise, and more preferably 100 - 10,000 poise, in view of formability/processability. The melt viscosity is a value determined using a flow tester under conditions: a temperature of 300°C, a load of 196 N, L/D (L: orifice length, D: inner orifice diameter) = 10/1, and retention of 6 minutes.

The mass ratio of the polymer electrolyte (Wa) to the thioether compound (Wd), i.e., Wa/Wd is preferably 60/40 - 99.99/0.01, more preferably 70/30 - 99.95/0.05, yet more preferably 80/20 - 99.9/0.1, and particularly preferably 90/10 - 99.5/0.5. The mass ratio of the polymer electrolyte at 60 or more can provide a better ion conductivity and a better cell performance. The mass ratio of the thioether compound at 40 or less can provide a higher durability of the formed polymer electrolyte during cell operation under conditions of high temperature and low humidity.

The mass ratio of the polymer azole compound (Wc) to the thioether compound (Wd), i.e., Wc/Wd is preferably 1/99 - 99/1. It is preferably 5/95 - 95/5, yet more preferably 10/90 - 90/10, and particularly preferably 20/80 - 80/20, in view of a balance between chemical stability and durability (dispersibility).

Further, the summed mass of the polymer azole compound and the thioether compound has a percentage of 0.01 mass% - 50 mass% based on the total mass of the polymer electrolyte membrane. The summed mass described above has a percentage more preferably of 0.05 mass% - 45 mass%, yet more preferably 0.1 mass% - 40 mass%, even more preferably 0.2 mass% - 35 mass%, and particularly preferably 0.3 mass% - 30 mass%, in view of a balance between ion conductivity and durability (dispersibility).

In the present embodiments, the polymer electrolyte membrane preferably has a thickness of 1 $\mu$m - 500 $\mu$m, more preferably 2 $\mu$m - 100 $\mu$m, yet more preferably 5 $\mu$m - 50 $\mu$m, and particularly preferably 5 $\mu$m - 25 $\mu$m. Control of the membrane thickness in the above range is preferred in that it can decrease troubles such as direct reaction between hydrogen and oxygen, and greatly restrict damage of the membrane and the like even if differential pressure or strain is formed in handling thereof in production of fuel cells or during fuel cell operation. It is preferred to control the membrane thickness in the above range, further considering that it can maintain the ion permeability of the polymer electrolyte membrane as well as the performance as solid polymer electrolyte.

By combining a fluoropolymer electrolyte having a specific ion exchange capacity with a microporous film, the polymer electrolyte membrane according to the present embodiments significantly suppresses the dimensional change ratio in water at 80°C, while maintaining high performance even under conditions of high temperature and low humidity. The dimensional change ratio (a plane direction/a membrane thickness direction) of the polymer electrolyte membrane according to the present embodiments in water at 80°C is preferably 0.70 or less, more preferably 0.50 or less, further preferably 0.30 or less, still further preferably 0.20 or less, and particularly preferably substantially 0.

Herein, the dimensional change ratio (a plane direction/a membrane thickness direction) of the polymer electrolyte membrane of the present embodiments in water at 80°C is measured as follows.

A membrane sample is made by cutting out a rectangular piece of 4 cm $\times$ 3 cm and left over 1 hour or more in a thermo-hygrostat (23°C and 50% RH), and then measured for dimensions in the plane direction of the rectangular membrane sample in dry state.

Next, the rectangular membrane sample after dimensional measurement is heated in hot water at 80°C for one hour, so as to absorb a sufficient amount of water to fall into a wet state where the electrolyte membrane has a water-dependent mass variation of 5% or less. At that time, the membrane is removed from the hot water, freed from the water on the surface to a full extent, and then weighed on an electronic balance. As a result, it is confirmed that the sample has a mass variation of 5% or less. The membrane sample in wet state which swells due to water absorption is removed from hot water, and then measured for dimensions in the plane direction and in the membrane thickness direction. Increments of respective dimensions in the plane direction and in the membrane thickness direction of the membrane sample in wet state, based on the membrane sample in dry state, are averaged. The average value is taken as dimensional change (%).

Next, the dimensional change ratio (a plane direction/a membrane thickness direction) is calculated based on the following formula:

$$\text{(Dimensional change ratio (a plane direction/a membrane thickness direction))} = \text{dimensional change (\%) in a plane direction/dimensional change (\%) in a membrane thickness direction}$$

The dimensional change ratio according to the present embodiments can be adjusted to fall within the above-mentioned range by adjusting the structure, elastic modulus and film thickness of the microporous film, the EW of the fluoropolymer electrolyte, the temperature of heat treatment for the polymer electrolyte membrane, etc.

Method of Producing Polymer Electrolyte Membrane

Next, methods of producing the polymer electrolyte membrane according to the present embodiments will be described. The polymer electrolyte membrane according to the present embodiments can be obtained by filling the fluoropolymer electrolyte into pores of the microporous film.

Methods of filling the polymer electrolyte into pores of the microporous film include, for example, but not particularly limited to, a method of coating the microporous film with a solution of the polymer electrolyte described later; a method of impregnating the microporous film with a solution of the polymer electrolyte and drying the film; and others. For example, a coating of a polymer electrolyte solution is formed on a thin and long casting substrate (sheet) which moves or is left at rest, and a thin and long microporous film is then allowed to come into contact with the solution, so as to produce an unfinished complex structure. This unfinished complex structure is dried in a hot air-circulating tank. Subsequently, a coating of a polymer electrolyte solution is further formed on the dried unfinished complex structure, so as to produce a polymer electrolyte membrane. The contact of the polymer electrolyte solution with the microporous film may be carried out either in dry state, or in undried or wet state. In addition, when the polymer electrolyte solution is allowed to come into contact with the microporous film, the contact may be carried out by pressing the microporous film with a rubber roller, or while controlling the tension of the microporous film. Moreover, the polyolefin microporous film may be filled by preforming a sheet containing the polymer electrolyte through extrusion or casting, laminating this sheet with the microporous film, and hot pressing the laminate.

For the purpose of improving the conductivity and mechanical strength of the polymer electrolyte membrane, one or more layers containing the polymer electrolyte may be applied on at least one main surface of the polymer electrolyte membrane produced as above. A crosslinking agent, UV radiation, electron beam, radioactive radiation, etc. may be applied to the polymer electrolyte membrane according to the present embodiments so that the compounds contained in the membrane can be crosslinked.

Moreover, preferably, the polymer electrolyte membrane according to the present embodiments further undergoes heat treatment. This heat treatment can tend to provide strong adhesion between the microporous film and the solid polymer electrolyte region which are present in the polymer electrolyte membrane, resulting in further improvement of the mechanical strength. The temperature for the heat treatment is a temperature preferably of 100°C - 230°C, more preferably 110°C - 230°C, yet more preferably 120°C - 200°C, and particularly preferably 140°C - 180°C. Control of heat treatment temperature in the above range tends to provide a stronger adhesion between the microporous film and the electrolyte composition region. The above temperature range is appropriate again in view of maintenance of a high water content and mechanical strength of the polymer electrolyte membrane. The time for heat treatment is preferably 1 min - 3 h, more preferably 5 min - 3 h, yet more preferably 10 min - 2 h, and particularly preferably 10 min - 30 min in view of a higher durability of the final polymer electrolyte membrane, but depending on the temperature for heat treatment.

(Polymer Electrolyte Solution)

The polymer electrolyte solution according to the present embodiments contains the foregoing polymer electrolyte and a solvent as well as other additives, if necessary. The polymer electrolyte solution is used as a filling solution for the polyolefin microporous film as it is, or after it is passed through steps of filtration, concentration and the like. Moreover, this solution can be also used as a material for the polymer electrolyte membrane, an electrode binder, etc., alone or in combination with another electrolyte solution.

Methods of producing the polymer electrolyte solution according to the present embodiments will be described below. Methods of producing the polymer electrolyte solution are not particularly limited. For instance, the polymer electrolyte is dissolved or dispersed in a solvent to form a solution in which optional additives are then dispersed. Alternatively, the polymer electrolyte and the additives are mixed via steps such as melt extrusion, stretching, etc., and the mixture is dissolved or dispersed in a solvent. The polymer electrolyte solution is thus obtained.

More specifically, first, a formed product from a precursor polymer for the polymer electrolyte is immersed in a reactive basic liquid for hydrolysis. The hydrolysis treatment converts the precursor polymer for the polymer electrolyte into the polymer electrolyte. Next, the formed product after hydrolysis is washed well with warm water, and then treated with an acid. Preferable acids used in acid treatment are not limited, but they can be inorganic acids such as hydrochloric acid, sulfuric acid and nitric acid, or organic acids such as oxalic acid, acetic acid, formic acid and trifluoroacetic acid. The acid treatment protonates the precursor polymer for the polymer electrolyte to produce a polymer electrolyte, for example, a perfluorocarbon sulfonic acid resin.

The formed product after acid treatment as described above (the formed product containing the polymer electrolyte) is dissolved or suspended in a solvent capable of dissolving or suspending the polymer electrolyte (a solvent with a good affinity to the resin). Such a solvent includes, for example, water; protic organic solvents such as ethanol, methanol, n-propanol, isopropyl alcohol, butanol and glycerol; and aprotic organic solvents such as N,N-dimethyl formamide, N,N-dimethyl acetamide and N-methyl pyrrolidone. These solvents may be used alone or in combination of two or more. In particular, when a single solvent is used, water is preferably used. When two or more solvents are used in combination, a mixed solvent of water and a protic organic solvent(s) is preferably used.

The method of dissolving or suspending the polymer electrolyte in a solvent is not particularly limited. For instance, the polymer electrolyte may be dissolved or dispersed directly in the foregoing solvent, but the polymer electrolyte is preferably dissolved or dispersed in the solvent in a temperature range of 0 - 250°C under the condition of atmospheric pressure or an elevated pressure under which the mixture is contained hermetically in an autoclave etc. When water and a protic organic solvent are used as solvent, the mixing ratio of water and the protic organic solvent may be properly set depending on method of dissolution, conditions for dissolution, type of the polymer electrolyte, concentration of the whole solid, temperature for dissolution, stirring speed, etc. The mass ratio of the protic organic solvent to water is preferably 0.1 - 10 parts of the protic organic solvent to 1 part of water, and more preferably 0.1 - 5 parts of the protic organic solvent to 1 part of water.

The polymer electrolyte solution includes one or more types of emulsion (liquid particles are dispersed in a liquid in the form of colloidal or larger particles to form a milk-like liquid), suspension (solid particles are dispersed in a liquid in the form of colloidal or microscopically visible particles), colloidal liquid (macromolecules are dispersed), micellar liquid (many small molecules are associated by intermolecular force to form a lyophilic colloid dispersion system) and the like.

The polymer electrolyte solution may be concentrated and/or filtered depending on the method of forming the polymer electrolyte membrane and its usage. The method of concentration includes, for example, but not limited to, a method of heating the polymer electrolyte solution and evaporating the solvent; a method of heating the polymer electrolyte solution and concentrating it under vacuum; and the like. When the polymer electrolyte solution is used as coating solution, too high a solid content of the polymer electrolyte solution tends to be difficult to handle due to a high viscosity, while too low a solid content thereof tends to lower productivity. Therefore, the solid content is preferably 0.5 mass% - 50 mass%. The typical method of filtering the polymer electrolyte solution includes, for example, but not limited to, a method of filtering through a filter under pressure. The filter is preferably made of a filtering material where the particle size with a trapping rate of 90% is 10 to 100 times larger than the average particle size of solid particles contained in the polymer electrolyte solution. The filtering material includes paper and metal. In the particular case where the filtering material is paper, the particle size with a trapping rate of 90% is 10 to 50 times larger than the average particle size of the solid particles. In the case where a metal filter is used, the particle size with a trapping rate of 90% is 50 to 100 times larger than the average particle size of the solid particles. Such setting as the particle size with a trapping rate of 90% is at least 10 times larger than the average particle size can restrict excessive elevation of the pressure required to deliver the solution as well as clogging of the filter in a short time. On the other hand, such setting as the particle size with a trapping rate of 90% is at most 100 times larger than the average particle size is preferable since aggregates of particles and insoluble residues of the resin, which may otherwise be foreign materials to the film, can be easily removed.

(Membrane Electrode Assembly)

The fluoropolymer electrolyte membrane according to the present embodiments can be used as a component of membrane electrode assemblies and solid polymer electrolyte fuel cells. A unit made of a polymer electrolyte membrane and two different electrode catalyst layers of an anode and a cathode, respectively, in which the unit, the membrane has the electrode catalyst layers joined onto both sides thereof, is called a membrane electrode assembly (shortly called "MEA" occasionally hereinafter). Another unit where a pair of gas diffusion layers are further joined, in a manner opposed to each other, onto the outer sides of the electrode catalyst layers may also be called MEA. The MEA according to the present embodiments is required to have a composition similar to that of a known MEA except that the fluoropolymer electrolyte membrane according to the present embodiment is employed as the polymer electrolyte membrane.

The electrode catalyst layer is composed of a catalytic particulate metal, a conductive carrier agent loaded therewith, and an optional water repellent agent. The catalyst metal should be a metal species capable of promoting oxidation of hydrogen and reduction of oxygen, including platinum, gold, silver, palladium, iridium, rhodium, ruthenium, iron, cobalt, nickel, chromium, tungsten, manganese, vanadium, and one or more selected from the group consisting of alloys made therefrom. Of all these, platinum is particularly preferred.

The method of producing MEA can be a known production method, but using the fluoropolymer electrolyte membrane according to the present embodiments, which includes the following method. First, an ion exchange resin as electrode binder is dissolved in a mixed solution of alcohol and water, in which platinum loaded carbon as electrode material is dispersed to form a paste. A certain amount of the paste is applied to PTFE sheets and dried. Next, a pair of polytetrafluoroethylene (PTFE) sheets are arranged so that the coated surfaces face each other, and the polymer electrolyte membrane is sandwiched therebetween and hot pressed at a temperature of 100°C - 200°C to join them together through transfer and thus produce MEA. The electrode binder is typically used in the form of a solution of ion exchange resin in a solvent (alcohol, water, etc.), but the polymer electrolyte solution according to the present embodiments can be used as the electrode binder and is preferably used in view of durability.

(Solid Polymer Electrolyte Fuel Cell)

MEA obtained as described above, or MEA with an optional structure such that a pair of gas diffusion electrodes are further joined, in a manner opposed to each other, onto the outer sides of the electrode catalyst layer, composes a solid polymer electrolyte fuel cell further in combination with other components, such as bipolar plates and backing plates which are commonly used in a solid polymer electrolyte fuel cell. Such a solid polymer electrolyte fuel cell is required to have a composition similar to that of a known type of fuel cell except that the above MEA is employed instead.

A bipolar plate means a plate made of a composite material from graphite and resin, or of metal which has grooves formed on the surface to flow gas such as fuel or oxidant. A bipolar plate has not only a function to transfer electrons into an external load circuit, but also a function to serve as channels for feeding fuel or oxidant near electrode catalyst. The above MEA is inserted between such bipolar plates, and these sets are stacked to manufacture a solid polymer electrolyte fuel cell according to the present embodiments.

The fluoropolymer electrolyte membrane according to the present embodiments as described above has a high water content as well as it is superior in dimensional stability, mechanical strength and physical durability, and it is thus suitable as electrolyte material for solid polymer electrolyte fuel cells.

Embodiments for carrying out the present invention have been described above, but the present invention is not limited to those embodiments. The present invention can be carried out in the form of different variants within the scope of its gist.

The foregoing various parameters are measured according to the measurement procedures shown in Example unless otherwise specified in particular.

Example

The present embodiment will be described below more specifically in reference to Examples, but the present embodiment is not limited only to these Examples. Measurement and evaluation procedures for various parameters described in the Examples are shown below.

(1) water content

The water content of a fluoropolymer electrolyte at 80°C was determined as described below. First, a membrane was formed from the polymer electrolyte, and a membrane sample were made by cutting out a rectangular piece of 30 mm x 40 mm and then measured for thickness. Then, the membrane sample was immersed in ion exchange water heated to 80°C. After one hour, the sample was removed from ion exchange water at 80°C, sandwiched between two pieces of filter paper, softly pressed two or three times to wipe out the water attached on the sample surface, and weighed on a electronic balance where the weight was expressed as W1 (g). Next, the membrane sample was dried in a thermo-hygrostat (23°C, 50% RH) over 1 hour. Then, the membrane sample was dried in a halogen moisture meter (HB 43 manufactured by Mettler-Toledo K. K.) at 160°C for 1 minute, and weighed. The absolute dry weight of the membrane sample was expressed as W2 (g). The water content (%) of the polymer electrolyte at 80°C was calculated according to the equation below using the above W1 and W2.

$$\text{water content} = (W1 - W2) / W2 \times 100$$

(2) ion exchange capacity

A polymer electrolyte membrane in the state of a proton as counter ion of the exchange group (a membrane having major surfaces each with an area of 2 - 20 $cm^3$) was immersed in 30 ml of a saturated aqueous solution of NaCl at 25°C which was then left with stirring for 30 minutes. Next, protons present in the saturated aqueous solution of NaCl were titrated with an aqueous solution of 0.01 N NaOH for neutralization using phenolphthalein as indicator. After neutralization, the mixture was filtered to obtain the polymer electrolyte membrane in the state of a sodium ion as counter ion of the exchange group. The membrane was rinsed with pure water, dried in vacuo, and weighed. When the amount of sodium hydroxide consumed for neutralization was expressed as M (mmol), and the mass of the polymer electrolyte membrane, which had a sodium ion as counter ion of the exchange group, was expressed as W (mg), the equivalent mass EW (g/equivalent) was determined by the following equation.

$$EW = (W \ / \ M) \ - \ 22$$

Then, the ion exchange capacity (meq/g) was calculated by converting the determined EW value into the inverse number and multiplying the inverse number by 1,000.

(3) film (or membrane) thickness

A film sample was placed at rest over 1 hour in a thermo-hygrostat of 23°C and 50% RH, and measured for thickness using a film thickness meter (trade name "B-1" manufactured by Toyo Seiki Seisaku-sho).

(4) tensile strength and elastic modulus

A rectangular film of 70 mm x 10 mm was cut out as a film sample and measured for tensile strength (kgf/cm$^2$) and elastic modulus (MPa) according to JIS K-7127.

(5) penetration strength

A film sample was subjected to needle penetration test using a compression tester (trade name "KES-G5" manufactured by Kato Tech Co., Ltd.). The peak load in the generated load-displacement curve was taken as penetration strength (gf / 25 $\mu$). A needle of 0.5 mm in diameter and 0.25 mm in tip curvature radius was used at a penetration rate of 2 cm/sec when the needle penetrated the film sample.

(6) dimensional change ratio

A membrane sample was made by cutting out a rectangular piece of 4 cm x 3 cm and left over 1 hour in a thermo-hygrostat (23°C and 50% RH), and then measured for dimensions in the plane direction of the rectangular membrane sample in dry state.

Next, the rectangular membrane sample after dimensional measurement was heated in hot water at 80°C for one hour so as to absorb a sufficient amount of water to fall into a wet state where the electrolyte membrane has a water-dependent mass variation of 5% or less. At that time, the membrane was removed from hot water, freed from the water on the surface to a full extent, and then weighed on an electronic balance. As a result, it was confirmed that the sample had a mass variation of 5% or less. The membrane sample in wet state which swelled due to water absorption was removed from hot water, and then measured for dimensions in the plane direction and the film thickness direction. Increments of respective dimensions in the plane direction and the film thickness direction of the membrane sample in wet state, based on the membrane sample in dry state, were averaged. The average value was taken as dimensional change (%).

Next, the dimensional change ratio (plane direction/membrane thickness direction) was calculated based on the following formula:

$$\text{(Dimensional change ratio (plane direction/membrane}$$
$$\text{thickness direction))} = \text{dimensional change (\%) in plane}$$
$$\text{direction/dimensional change (\%) in membrane thickness}$$
$$\text{direction.}$$

(7) glass transition temperature

Fluoropolymer electrolyte membrane was measured for glass transition temperature according to JIS-C-6481. Polymer electrolyte membrane was cut out to provide a test piece of 5 mm in width. The test piece was heated from room temperature at a rate of 2 °C/min using a dynamic mechanical analyzer (type DVA-225 manufactured by IT Measurement Control) to measure dynamic viscoelasticity and loss tangent for the test piece in the analyzer. The temperature where loss tangent measured had a peak value was the glass transition temperature.

(8) porosity

The porosity of polyolefin microporous film was measured using a mercury porosimeter (product name: Autopore IV 9520, manufactured by Shimadzu Corporation) based on the mercury penetration method. A sheet of microporous film was cut out to provide a piece of 25 mm in width, and a part thereof weighing about 0.08 - 0.12 g was sampled. It was folded and set in a standard cell. It was measured at initial pressure of about 25 kpa. The porosity value of measurement was taken as the void percentage of the microporous film.

(9) creep resistance

Creep resistance was measured using a tensile creep tester (manufactured by A & D). A polymer electrolyte membrane was subjected to a load of surface pressure, 20 kg/cm$^2$ under an environment of a temperature of 90°C and a relative humidity of 95% for 20 hours, and elongation (%) in the plane direction of the polymer electrolyte membrane was measured. A smaller elongation value indicates a higher creep resistance.

(10) observation of multilayer structure in polyolefin microporous film

Polyolefin microporous film was cut out in a rectangle of 3 mm x 15 mm, which was then stained with vapor of ruthenium oxide. The film was freeze cracked to make a sample of the polyolefin microporous film for sectional observation. The cracked piece was fixed on a sample stage, and coated with plasma osmium (conduction treatment) to prepare a sample for observing sectional morphology.
The sample for observing sectional morphology was used to observe the morphology by SEM (product number: S-4700, acceleration voltage: 5 kV, detector: secondary electron detector, reflection electron detector) and examine the presence or absence of multilayer structure through observation images.

(11) conductivity

The conductivity of a polymer electrolyte membrane under conditions of high temperature and low humidity (90°C, 50% RH) was measured using a test apparatus for polymer membrane water absorption (manufactured by BEL Japan, Inc.; model number: MSB-AD-V-FC). First, a polymer electrolyte membrane was cut into a piece with a size of 1 cm in width x 3 cm in length, and it was then attached to a conductivity-measuring cell. Subsequently, the conductivity-measuring cell was attached into a chamber of the test apparatus. The chamber was adjusted to have an internal atmosphere of 90°C and less than 1% RH, so that the influence of water content on the polymer electrolyte membrane was once removed. Thereafter, steam generated by use of ion exchange water was introduced into the chamber to humidify it, and the chamber was adjusted to have an atmosphere of 90°C and 50% RH. After confirming that the atmosphere in the chamber had been stabilized, the conductivity (S/cm) of the polymer electrolyte membrane was measured.

(12) evaluation of fuel cell

A fuel cell comprising a polymer electrolyte membrane was evaluated as follows. First, an electrode catalyst layer was produced as follows. 3.31 g of a polymer solution prepared by concentrating a solution of 5% by mass of perfluorosulfonic acid polymer SS-910 (manufactured by Asahi Kasei Corporation; equivalent weight (EW): 910; solvent composition (mass ratio): ethanol/water = 50/50) to 11% by mass, was added to 1.00 g of Pt-supported carbon (TEC10E40E manufactured by Tanaka Kikinzoku Kogyo; Pt: 36.4 wt %). Thereafter, 3.24 g of ethanol was further added thereto, and the mixture was then thoroughly mixed with a homogenizer to obtain an electrode ink. This electrode ink was applied onto a PTFE sheet according to a screen printing method. Two levels of application were adopted; namely, the supported Pt amount and the supported polymer amount were both set at 0.15 mg/cm$^2$, and the supported Pt amount and the supported polymer amount were set at 0.15 mg/cm$^2$. After application of the electrode ink, it was dried at a room temperature for 1 hour, and in the air at 120°C for 1 hour, so as to obtain an electrode catalyst layer having a thickness of approximately 10 μm. Among the electrode catalyst layers thus obtained, the electrode layer, in which the supported Pt amount and the supported polymer amount were both set at 0.15 mg/cm$^2$, was used as an anode catalyst layer, whereas the electrode layer, in which the supported Pt amount and the supported polymer amount were both set at 0.30 mg/cm$^2$, was used as a cathode catalyst layer.
The anode catalyst layer thus obtained was faced to the cathode catalyst layer, and a polymer electrolyte membrane was then sandwiched therebetween, followed by hot pressing at 160°C and at a contact pressure of 0.1 MPa, so that the anode catalyst layer and the cathode catalyst layer were transferred onto the polymer electrolyte membrane and were then jointed to produce MEA.

Carbon clothes (ELAT (registered trademark) B-1, manufactured by DE NORA NORTH AMERICA) were jointed as gas diffusion layers onto both sides of the MEA (the outer surfaces of the anode catalyst layer and the cathode catalyst layer), and the MEA thus prepared was then integrated into a cell for evaluation. This cell for evaluation was set into an evaluation apparatus (fuel cell evaluation system 890CL, manufactured by Toyo Corporation, Japan), and the temperature was then increased to 80°C. Thereafter, hydrogen gas was supplied to the anode side at a rate of 260 cc/min, and air gas was supplied to the cathode side at a rate of 880 cc/min, so that a pressure of 0.20 MPa (absolute pressure) was applied to both the anode and the cathode. A water bubbling system was used for gas humidification. Hydrogen gas was humidified at 90°C, whereas air gas was humidified at 80°C. Each gas was supplied to the cell. A current-voltage curve was generated by measurements in this state, so as to examine initial properties.

Next, an endurance test was carried out at a cell temperature of 80°C. Gas humidification temperatures applied to the anode and cathode sides were set at 45°C and 80°C, respectively. Electricity was generated at a current density of 0.1 A/cm$^2$ for 1 minute in a state where the anode side was pressurized at 0.10 MPa (absolute pressure) and the cathode side was pressurized at 0.05 MPa (absolute pressure). Thereafter, the circuit was opened for 3 minutes to lower the current value to 0, and OCV (open-circuit voltage) was then examined. This electricity generation-OCV cycle was repeated to conduct an endurance test.

In this endurance test, if a pinhole is generated on the polymer electrolyte membrane, a phenomenon called cross leakage occurs, and a large amount of hydrogen gas is leaked to the cathode side. In order to examine the amount of hydrogen gas leaked as a result of such cross leakage, the hydrogen concentration in exhaust gas on the cathode side was measured using micro GC (CP4900 manufactured by Varian, Holland). The test was terminated at the time point when the measurement value exceeded 10,000 ppm, and the elapsed time was shown in Table 1 as evaluation of the endurance test.

Example 1

(preparation of polymer electrolyte solution)

First, as the precursor polymer of polymer electrolyte, the precursor of perfluoro sulfonic acid resin obtained from tetrafluoroethylene and $CF_2 = CFO(CF_2)_2$-$SO_2F$ (after hydrolysis and acid treatment, EW: 730 g/equivalent, an ion exchange capacity 1.3 meq/g) was provided in the form of pellets. Next, the precursor pellets were exposed to an aqueous solution containing potassium hydroxide (15 mass%) and methyl alcohol (50 mass%) at 80°C for 20 hours for hydrolysis. Subsequently, the pellets were immersed in water at 60°C for 5 hours. Then, the pellets after water immersion were immersed in an aqueous solution of 2N HCl for 1 hour, which was repeated five times by using a fresh aqueous solution of hydrochloric acid each time. The pellets after repeated immersion in an aqueous hydrochloric acid solution were washed with ion exchange water, and dried. As a result, the pellets of perfluorocarbon sulfonic acid resin (PFSA) as polymer electrolyte were obtained.

These pellets were placed together with an aqueous ethanol solution (water : ethanol = 50.0 : 50.0 (mass ratio)) into a 5L-autoclave, enclosed tightly, raised the temperature to 160°C under blade agitation, and kept at 160°C for 5 hours. Then, the autoclave was left to be cooled. Thus, a homogeneous solution of perfluorocarbon sulfonic acid resin having a solid content of 5 mass% was obtained and named Solution 1.

(preparation of polymer electrolyte membrane)

Polyolefin microporous film (grade: Solupor 3P07A, film thickness: 8 $\mu$m, porosity: 86%, manufactured by DSM Solutech) was fixed to a SUS frame of 11 cm x 11 cm, and immersed in the above Solution 1 to impregnate Solution 1 into pores of the polyolefin microporous film. The polyolefin microporous film impregnated with Solution 1 was dried in an oven at 90°C for 5 minutes. This serial treatment of impregnation and drying was repeated multiple times until the polyolefin microporous film was impregnated well in the pores with Solution 1. Next, the polyolefin microporous film after good impregnation with Solution 1 was subjected to heat treatment in an oven at 120°C for 1 hour to obtain polymer electrolyte membrane. The results evaluated for the polymer electrolyte membrane are shown in Table 1.

Example 2

(preparation of polymer electrolyte solution)

Solution 1 was prepared as described in Example 1.

(preparation of polymer electrolyte membrane)

Polyolefin microporous film (grade: Solupor 3P07A, film thickness: 8 $\mu$m, porosity: 86%, manufactured by DSM Solutech), which was observed to have a multilayer structure, was cut out in the same size as the bottom surface of a glass petri dish 154 mm in diameter, and placed at rest in the glass petri dish over the bottom surface. Solution 1 was poured into the glass petri dish so that the pores of the polyolefin microporous film could be filled with the polymer electrolyte to a full extent, and then dried on a hot plate heated at 60°C. Thirty minutes after the heating started, the preset temperature was changed into 90°C, and the heating was continued another 30 minutes. Next, the polyolefin microporous film after good impregnation with Solution 1 was subjected to heat treatment in an oven at 180°C for 10 minutes to obtain polymer electrolyte membrane. The results evaluated for the polymer electrolyte membrane are shown in Table 1.

Example 3 (not according to the invention)

(preparation of polymer electrolyte solution)

Solution 1 was prepared as described in Example 1.

(preparation of polymer electrolyte membrane)

Except for that stretched polytetrafluoroethylene without any multilayer structure (grade: #1326, film thickness: 8 $\mu$m, porosity: 73%, manufactured by Donaldson) was used as polyolefin microporous film, polymer electrolyte solution was prepared as described in Example 1. The results evaluated for the polymer electrolyte membrane are shown in Table 1.

Example 4

(preparation of polymer electrolyte solution)

A solution of perfluorocarbon sulfonic acid resin was obtained as described in Examine 1 with the exception that the precursor pellets of perfluoro sulfonic acid resin obtained from tetrafluoroethylene and $CF_2 = CFO(CF_2)_2\text{-}SO_2F$, which was the precursor polymer of the polymer electrolyte of Example 1, were replaced with pellets with EW of 454 g/equivalent (ion exchange capacity of 2.2 meq/g) obtained after hydrolysis and acid treatment. The obtained solution was named as Solution 2.

(preparation of polymer electrolyte membrane)

A polymer electrolyte membrane was obtained as described in Example 2 with the exception that Solution 1 was replaced with Solution 2. The results evaluated for the polymer electrolyte membrane are shown in Table 1.

Example 5

(preparation of polymer electrolyte solution)

A solution of perfluorocarbon sulfonic acid resin was obtained as described in Examine 1 with the exception that the precursor pellets of perfluoro sulfonic acid resin obtained from tetrafluoroethylene and $CF_2 = CFO(CF_2)_2\text{-}SO_2F$, which was the precursor polymer of the polymer electrolyte of Example 1, were replaced with pellets with EW of 588 g/equivalent (ion exchange capacity of 1.7 meq/g) obtained after hydrolysis and acid treatment. The obtained solution was named as Solution 3.

(preparation of polymer electrolyte membrane)

A polymer electrolyte membrane was obtained as described in Example 2 with the exception that Solution 1 was replaced with Solution 3. The results evaluated for the polymer electrolyte membrane are shown in Table 1.

Example 6 (not according to the invention)

(preparation of polymer electrolyte solution)

Solution 3 was prepared as described in Example 5.

(preparation of polymer electrolyte membrane)

A polymer electrolyte membrane was obtained as described in Example 5 with the exception that a stretched polytetrafluoroethylene (PTFE) film without any multilayer structure (grade: #1325, film thickness: 25 $\mu$m, porosity: 71%, manufactured by Donaldson) was used as a polyolefin microporous film. The results evaluated for the polymer electrolyte membrane are shown in Table 1.

Example 7

(preparation of polymer electrolyte solution)

Solution 3 was prepared as described in Example 5. (preparation of stretched polytetrafluoroethylene (PTFE) film)

406 mL of hydrocarbon oil used as a liquid lubricant oil for extrusion was added to 1 kg of PTFE fine powders having a number average molecular weight of 6,500,000 at 20°C, and they were then blended.
Subsequently, a round bar-shaped product formed by the paste extrusion of the obtained mixture was formed into a film shape using a calendar roll that had been heated to 70°C, so as to obtain a PTFE film. This film was subjected to a hot air drying furnace at 250°C, so that the extrusion aid was removed by evaporation, thereby obtaining an unbaked film having an average thickness of 200 $\mu$m and an average width of 150 mm.
Thereafter, this unbaked PTFE film was stretched at 5-fold magnification to the MD direction, and it was then reeled up.
Three pieces of the obtained MD-direction-stretched PTFE films were laminated, and both ends were clipped. It was stretched at 8-fold magnification to the TD direction, and heat fixation was then carried out, so as to obtain a stretched PTFE film. The temperature applied during the stretching operation was 290°C, and the temperature applied during the heat fixation was 360°C.

(preparation of polymer electrolyte membrane)

A polymer electrolyte membrane was obtained as described in Example 5 with the exception that a stretched polytetrafluoroethylene (PTFE) film having a multilayer structure (film thickness: 10 $\mu$m, porosity: 71%) was used as a polyolefin microporous film. The results evaluated for the polymer electrolyte membrane are shown in Table 1.

Example 8 (not according to the invention)

(preparation of polymer electrolyte solution)

Solution 1 was prepared as described in Example 1.

(preparation of polypropylene (PP) film)

A polypropylene (PP) resin having a density of 0.90 and a viscosity average molecular weight of 300,000 was placed into a twin screw extruder having an aperture of 25 mm and L/D = 48 via a feeder. The resin was kneaded under conditions of 220°C and 200 rpm, and it was then extruded from a T die with a lip thickness of 3 mm capable of coextrusion, which was established at the tip of the extruder. It was immediately cooled to 25°C and was then rolled along a cast roll, so as to obtain a precursor film having a film thickness of 20 mm.
This precursor film was uniaxially stretched by a factor of 1.5 at 40°C, the thus stretched film was further uniaxially stretched by a factor 2.0 at 120°C, and the resultant film was then subjected to heat fixation at 130°C. The obtained film was defined as a polypropylene (PP) film (film thickness: 16 $\mu$m, porosity: 60%), and the section thereof was observed. As a result, a multilayer structure was not confirmed.

(preparation of polymer electrolyte membrane)

A polymer electrolyte membrane was obtained as described in Example 1 with the exception that a polypropylene (PP) film was used as a polyolefin microporous film. The results evaluated for the polymer electrolyte membrane are shown in Table 1.

Example 9

(preparation of polymer electrolyte solution)

A solution of perfluorocarbon sulfonic acid resin was obtained as described in Examine 1 with the exception that the precursor pellets of perfluoro sulfonic acid resin obtained from tetrafluoroethylene and $CF_2 = CFO(CF_2)_2\text{-}SO_2F$, which was the precursor polymer of the polymer electrolyte of Example 1, were replaced with pellets with EW of 399 g/equivalent (ion exchange capacity of 2.5 meq/g) obtained after hydrolysis and acid treatment. The obtained solution was named as Solution 4.

(preparation of polymer electrolyte membrane)

A polymer electrolyte membrane was obtained as described in Example 2 with the exception that Solution 1 was replaced with Solution 4. The results evaluated for the polymer electrolyte membrane are shown in Table 1.

Example 10

(preparation of polymer electrolyte solution)

The precursor pellets of perfluoro sulfonic acid resin obtained from tetrafluoroethylene and $CF_2 = CFO(CF_2)_2\text{-}SO_2F$, which was the precursor polymer of the polymer electrolyte of Example 1, were melted and kneaded at a mass ratio of 90/10 with polyphenylene sulfide (manufactured by Sigma-Aldrich Japan; melt viscosity at 310°C: 275 poise), using a twin screw extruder (manufactured by WERNER & PELEIDERER; model number: ZSK-40; melting and kneading temperature: 280°C to 310°C; screw rotating number: 200 rpm). The thus melted and kneaded resin was cut through a strand die to obtain cylindrical pellets each having a diameter of approximately 2 mm and a length of approximately 2 mm. These cylindrical pellets were subjected to hydrolysis and acid treatment as described in Example 1, and were then dissolved in a 5-L autoclave, so as to obtain Solution A having a solid concentration of 5%.
Thereafter, dimethyl acetamide (DMAC) was added to a solution of 5% by mass of perfluorocarbon acid polymer (Aciplex-SS (registered trademark); manufactured by Asahi Kasei E-materials Corp.; EW720; solvent composition (mass ratio): ethanol/water = 50/50) (Solution B-1), and the mixed solution was then refluxed at 120°C for 1 hour. The reaction solution was subjected to vacuum concentration using an evaporator, so as to produce a solution comprising a perfluorocarbon sulfonic acid resin and DMAC at a mass ratio of 1.5/98.5 (Solution B-2).
Moreover, poly[2,2'-(m-phenylene)-5,5'-bibenzimidazole] (PBI) (manufactured by Sigma-Aldrich Japan; weight average molecular weight: 27,000), together with DMAC, was placed in an autoclave, and was hermetically sealed. The temperature of the autoclave was increased to 200°C, and it was then retained for 5 hours. Thereafter, the autoclave was naturally cooled, so as to obtain a PBI solution comprising PBI and DMAC at a mass ratio of 10/90. Furthermore, this PBI solution was 10-fold diluted with DMAC to produce a homogeneous solution of 1% by mass of PBI. This solution was named as Solution C.
The above described solutions were mixed at a mass ratio of Solution A/Solution B-1/Solution B-2/Solution C = 30.6/14.9/46.9/7.6. The mixed solution was stirred until it became homogeneous, so as to obtain a mixed solution of perfluorocarbon sulfonic acid resin/polyphenylene sulfide resin/PBI = 92.5/5/2.5 (mass ratio). This solution was named as Solution 5.

(preparation of polymer electrolyte membrane)

A polymer electrolyte membrane was obtained as described in Example 2 with the exception that Solution 1 was replaced with Solution 5. The results evaluated for the polymer electrolyte membrane are shown in Table 1.

Example 11

Solution A and Solution B-1 were prepared as described in Example 10, and these solutions were mixed and stirred at a mass ratio of Solution A/dimethyl acetamide/Solution B-1 = 4/1/4, so as to produce a solution of perfluorocarbon sulfonic acid resin/polyphenylene sulfide resin = 95/5 (mass ratio). This solution was named as Solution 6.

(preparation of polymer electrolyte membrane)

A polymer electrolyte membrane was obtained as described in Example 2 with the exception that Solution 1 was replaced with Solution 6. The results evaluated for the polymer electrolyte membrane are shown in Table 1.

Example 12

Solution B-1, Solution B-2 and Solution C were prepared as described in Example 10, and these solutions were mixed at a mass ratio of Solution B-1/Solution B-2/Solution C = 45.5/46.9/7.6, so as to produce a solution of perfluorocarbon sulfonic acid resin/PBI = 97.5/2.5 (mass ratio). This solution was named as Solution 7.

(preparation of polymer electrolyte membrane)

A polymer electrolyte membrane was obtained as described in Example 2 with the exception that Solution 1 was replaced with Solution 7. The results evaluated for the polymer electrolyte membrane are shown in Table 1.

Reference Example 1

(preparation of polymer electrolyte solution)

Solution 1 was prepared as described in Example 1.

(preparation of polyolefin microporous film)

Polyethylene microporous film loaded with an inorganic filler (silica) (grade: 040A2, film thickness: 40 $\mu$m, porosity: 80%, manufactured by Nippon Sheet Glass) was cut out in a 10-cm square which was heated in an aqueous solution of 2N potassium hydroxide at 80°C. After heating, the sample was washed with washing water until washing water used here became neutral, and water adhered on the sample was wiped out with filter paper, and then the sample was dried at room temperature for 20 hours.
Infrared spectrum of the dried sample was measured by a Fourier-transform infrared spectrometer (FT/IR-460, manufactured by JASCO Corporation). As a result, peaks due to silica were not detected.
This film was named Polyolefin Microporous Film 1 (film thickness: 14 $\mu$m, porosity: 65%). It had no multilayer structure in observation of its section.

(preparation of polymer electrolyte membrane)

Except for that Polyolefin Microporous Film 1 was used as polyolefin microporous film, polymer electrolyte membrane was prepared as described in Example 1. The results evaluated for the polymer electrolyte membrane are shown in Table 1.

Comparative Example 1

(preparation of polymer electrolyte solution)

Solution 1 was prepared as described in Example 1.

(preparation of polymer electrolyte membrane)

The above Solution 1 was stirred well with a stirrer, and then concentrated under vacuum at 80°C to prepare a cast solution having a solid content of 20%.
The cast solution (21 g) was poured into a petri dish 154 mm in diameter, and then dried on a hot plate heated at 90°C for 1 hour. Next, the petri dish was placed in an oven and subjected to heat treatment at 160°C for 1 hour. Subsequently, the petri dish having a membrane formed therein was removed from the oven, and ion exchange water was poured into the petri dish to detach the membrane. Thus, polymer electrolyte membrane with a thickness of about 30 $\mu$m was obtained. The results evaluated for the polymer electrolyte membrane are shown in Table 1.

Comparative Example 2

(preparation of polymer electrolyte solution)

Solution 2 was prepared as described in Example 4.

(preparation of polymer electrolyte membrane)

A polymer electrolyte membrane was obtained as described in Comparative Example 1 with the exception that Solution 1 was replaced with Solution 2. The results evaluated for the polymer electrolyte membrane are shown in Table 1.

Comparative Example 3

(preparation of polymer electrolyte solution)

A solution of perfluorocarbon sulfonic acid resin was obtained as described in Examine 1 with the exception that the precursor pellets of perfluoro sulfonic acid resin obtained from tetrafluoroethylene and $CF_2 = CFO(CF_2)_2\text{-}SO_2F$, which was the precursor polymer of the polymer electrolyte of Example 1, were replaced with pellets with EW of 1100 g/equivalent (ion exchange capacity of 0.9 meq/g) obtained after hydrolysis and acid treatment. The obtained solution was named as Solution 8.

(preparation of polymer electrolyte membrane)

A polymer electrolyte membrane was obtained as described in Example 2 with the exception that Solution 1 was replaced with Solution 8. The results evaluated for the polymer electrolyte membrane are shown in Table 1.

[Table 1]

| | Polymer electrolyte | | | Additive | Microporous film | | | | | Polymer electrolyte membrane | | | | | | | | | | Endurance test (hr) |
|---|---|---|---|---|---|---|---|---|---|---|---|---|---|---|---|---|---|---|---|---|
| | Material | Water content (%) | Ion exchange capacity (meq/g) | Material | Material | Film thickness (μm) | Multilayer structure | Elastic modulus (MPa) | Porosity (%) | Membrane thickness (μm) | Tensile strength (kgf/cm²) | Penetration strength (gf/25μ) | Dimensional change (plane) (%) | Dimensional change (membrane thickness) (%) | Dimensional change ratio | Tg (°C) | Creep resistance (%) | Conductivity [S/cm] | |
| Example 1 | PFSA | 244 | 1.3 | | PE (Solupor 3P07A) | 8 | Yes | MD/TD 135/245 | 86 | 20 | 280 | 80 | 1 | 148 | 0.01 | 158 | 20 | 0.05 | 579 |
| Example 2 | PFSA | 89 | 1.3 | | PE (Solupor 3P07A) | 8 | Yes | MD/TD 135/245 | 86 | 20 | 280 | 150 | 4 | 108 | 0.04 | 148 | 25 | 0.05 | 418 |
| Example 3 | PFSA | 134 | 1.3 | | PTFE (#1326) | 8 | No | MD/TD 20/45 | 73 | 20 | 270 | 230 | 13 | 26 | 0.50 | 145 | 73 | 0.05 | 625 |
| Example 4 | PFSA | 203 | 2.2 | | PE (Solupor 3P07A) | 15 | Yes | MD/TD 230/205 | 86 | 24 | 132 | 61 | 9 | 121 | 0.07 | 138 | 25 | 0.15 | 284 |
| Example 5 | PFSA | 159 | 1.7 | | PE (Solupor 3P07A) | 15 | Yes | MD/TD 230/205 | 86 | 27 | 132 | 53 | 9 | 70 | 0.13 | 140 | 25 | 0.08 | 577 |
| Example 6 | PFSA | 159 | 1.7 | | PTFE (#1325) | 25 | No | MD/TD 20/43 | 71 | 30 | 272 | 200 | 17 | 33 | 0.52 | 142 | 75 | 0.08 | 350 |
| Example 7 | PFSA | 159 | 1.7 | | PTFE | 10 | Yes | MD/TD 34/49 | 71 | 30 | 394 | 93 | 15 | 55 | 0.27 | 142 | 55 | 0.08 | 514 |
| Example 8 | PFSA | 89 | 1.3 | | PP | 16 | No | MD/TD 302/>500 | 60 | 20 | 185 | 23 | 2 | 22 | 0.09 | 132 | 10 | 0.05 | 159 |
| Example 9 | PFSA | 250 | 2.5 | | PE (Solupor 3P07A) | 15 | Yes | MD/TD 230/205 | 86 | 23 | 125 | 69 | 20 | 179 | 0.01 | 136 | 85 | 0.18 | 219 |
| Example 10 | PFSA | 89 | 1.3 | PPS,PBI | PE (Solupor 3P07A) | 8 | Yes | MD/TD 135/245 | 86 | 20 | 467 | 165 | 3 | 111 | 0.03 | 150 | 20 | 0.05 | 627 |
| Example 11 | PFSA | 89 | 1.3 | PPS | PE (Solupor 3P07A) | 8 | Yes | MD/TD 135/245 | 86 | 20 | 326 | 150 | 4 | 105 | 0.04 | 148 | 25 | 0.05 | 521 |
| Example 12 | PFSA | 89 | 1.3 | PBI | PE (Solupor 3P07A) | 8 | Yes | MD/TD 135/245 | 86 | 20 | 460 | 158 | 3 | 110 | 0.03 | 149 | 20 | 0.05 | 478 |
| Reference Example 1 | PFSA | 166 | 1.3 | | PE | 14 | No | MD/TD 60/55 | 65 | 20 | 300 | 50 | 10 | 15 | 0.67 | 140 | 40 | 0.05 | 66 |
| Comparative Example 1 | PFSA | 50 | 1.3 | | | | | | | 20 | 130 | 40 | 29 | 29 | 1.00 | 140 | 40 | 0.05 | 150 |
| Comparative Example 2 | PFSA | 250 | 2.2 | | | | | | | 20 | not available | not available | 200 | 200 | 1.00 | 138 | not available | 0.18 | <50 |
| Comparative Example 3 | PFSA | 39 | 0.9 | | PE (Solupor 3P07A) | 8 | Yes | MD/TD 135/245 | 86 | 20 | 224 | 99 | 12 | 12 | 1.00 | 143 | 25 | <0.01 | 180 |

The present application is based on a Japanese patent application (Patent Application No. 2009-051226) filed with the Japan Patent Office on March 4, 2009.

Industrial Applicability

The fluoropolymer electrolyte of the present invention provides fluoropolymer electrolyte membranes superior in durability which are industrially applicable to electrolyte materials for solid polymer electrolyte fuel cells.

**Claims**

1. A fluoropolymer electrolyte membrane comprising a fluoropolymer electrolyte having an ion exchange capacity of 1.3 to 3.0 meq/g in a pore of a microporous film,
   wherein the fluoropolymer electrolyte is a copolymer comprising a repeating unit represented by general formula (1) and a repeating unit represented by general formula (2), the formulas (1) and (2) being as follows:

   $$-(CF_2CF_2)- \qquad (1)$$

   $$-(CF_2-CF(-O-(CF_2CFX)_n-O_p-(CF_2)_m-SO_3H) ) \qquad (2)$$

   wherein, X represents a fluorine atom or a $-CF_3$ group; n represents an integer of 0 to 1, m represents an integer of 0 to 12, and p represents 0 or 1, provided that a combination of n = 0 and m = 0 is excluded,
   wherein the microporous film has a multilayer structure,
   wherein the multilayer structure is a pie dough-shaped multilayer structure,
   wherein the multilayer structure has microporous film layers and air layers stacked alternately in the thickness direction,
   wherein the microporous film is made of a polyolefin resin,
   wherein the air layer is a space between adjacent resin layers in the film thickness direction.

2. The fluoropolymer electrolyte membrane according to Claim 1, wherein its dimensional change ratio (a plane direction/a membrane thickness direction) in water at 80°C is 0.50 or less.

3. The fluoropolymer electrolyte membrane according to Claim 1 or 2, wherein the air layer has an interlayer spacing of 0.01 $\mu$m to 20 $\mu$m.

4. The fluoropolymer electrolyte membrane according to any one of Claims 1 to 3, wherein the microporous film has an elastic modulus of at least one direction of MD and TD of 250 MPa or less.

5. The fluoropolymer electrolyte membrane according to any one of Claims 1 to 4, wherein the microporous film is made of polyethylene.

6. The fluoropolymer electrolyte membrane according to any one of Claims 1 to 5, wherein the fluoropolymer electrolyte has a water content of 30% by mass to 300% by mass at 80°C.

7. A membrane electrode assembly (MEA) comprising the fluoropolymer electrolyte membrane according to any one of Claims 1 to 6.

8. A fuel cell comprising the fluoropolymer electrolyte membrane according to any one of Claims 1 to 6.

**Patentansprüche**

1. Fluorpolymerelektrolytmembran, umfassend einen Fluorpolymerelektrolyten mit einer Ionenaustauschkapazität von 1,3 bis 3,0 meq/g in einer Pore einer mikroporösen Folie,
   wobei es sich bei dem Fluorpolymerelektrolyten um ein Copolymer handelt, das eine Wiederholungseinheit der allgemeinen Formel (1) und eine Wiederholungseinheit der allgemeinen Formel (2) umfasst, wobei die Formeln (1) und (2) wie folgt aussehen:

$$-(CF_2CF_2)- \qquad (1)$$

$$-(CF_2\text{-}CF(\text{-}O\text{-}(CF_2CFX)_n\text{-}O_p\text{-}(CF_2)_m\text{-}SO_3H)) \qquad (2)$$

wobei X für ein Fluoratom oder eine -CF$_3$-Gruppe steht; n für eine ganze Zahl von 0 bis 1 steht, m für eine ganze Zahl von 0 bis 12 steht und p für 0 oder 1 steht, mit der Maßgabe, dass eine Kombination von n = 0 und m = 0 ausgeschlossen ist;
wobei die mikroporöse Folie eine Mehrschichtstruktur aufweist,
wobei es sich bei der Mehrschichtstruktur um eine blätterteigförmige Mehrschichtstruktur handelt, wobei die Mehrschichtstruktur mikroporöse Folienschichten und Luftschichten, die in der Dickenrichtung alternierend gestapelt sind, aufweist, wobei die mikroporöse Folie aus einem Polyolefinharz besteht,
wobei es sich bei der Luftschicht um einen Raum zwischen benachbarten Harzschichten in der Foliendickenrichtung handelt.

2. Fluorpolymerelektrolytmembran nach Anspruch 1, wobei das Maßänderungsverhältnis (eine Ebenenrichtung/eine Membrandickenrichtung) in Wasser bei 80°C 0,50 oder weniger beträgt.

3. Fluorpolymerelektrolytmembran nach Anspruch 1 oder 2, wobei die Luftschicht einen Zwischenschichtabstand von 0,01 μm bis 20 μm aufweist.

4. Fluorpolymerelektrolytmembran nach einem der Ansprüche 1 bis 3, wobei die mikroporöse Folie einen Elastizitätsmodul von mindestens einer Richtung von MD und TD von 250 MPa oder weniger aufweist.

5. Fluorpolymerelektrolytmembran nach einem der Ansprüche 1 bis 4, wobei die mikroporöse Folie aus Polyethylen besteht.

6. Fluorpolymerelektrolytmembran nach einem der Ansprüche 1 bis 5, wobei der Fluorpolymerelektrolyt einen Wassergehalt von 30 Massen-% bis 300 Massen-% bei 80°C aufweist.

7. Membran-Elektroden-Anordnung (MEA), umfassend die Fluorpolymerelektrolytmembran nach einem der Ansprüche 1 bis 6.

8. Brennstoffzelle, umfassend die Fluorpolymerelektrolytmembran nach einem der Ansprüche 1 bis 6.

**Revendications**

1. Membrane à électrolyte polymère fluoré comprenant un électrolyte polymère fluoré ayant une capacité d'échange d'ions de 1,3 à 3,0 méq. /g dans un pore d'un film microporeux,
l'électrolyte polymère fluoré étant un copolymère comprenant un motif répétitif représenté par la formule générale (1) et un motif répétitif représenté par la formule générale (2), les formules (1) et (2) étant comme suit :

$$-(CF_2CF_2)- \qquad (1)$$

$$-(CF_2\text{-}CF(\text{-}O\text{-}(CF_2CFX)_n\text{-}O_p\text{-}(CF_2)_m\text{-}SO_3H)) \qquad (2)$$

où X représente un atome de fluor ou un groupe -CF$_3$, n représente un entier valant 0 ou 1, m représente un entier valant de 0 à 12, et p représente 0 ou 1, à condition que la combinaison de n = 0 et m = 0 soit exclue,
le film microporeux ayant une structure multicouche, la structure multicouche étant une structure multicouche en forme de pâte à tarte,
la structure multicouche ayant des couches de film microporeux et des couches d'air empilées alternativement dans la direction de l'épaisseur,
le film microporeux étant constitué d'une résine de polyoléfine,
la couche d'air étant un espace entre couches de résine adjacentes dans la direction de l'épaisseur du film.

2. Membrane à électrolyte polymère fluoré selon la revendication 1, son rapport de changement dimensionnel (direction dans le plan/direction de l'épaisseur de la membrane) dans l'eau à 80 °C étant de 0,50 ou moins.

3. Membrane à électrolyte polymère fluoré selon la revendication 1 ou 2, la couche d'air ayant un écartement entre couches de 0,01 $\mu$m à 20 $\mu$m.

4. Membrane à électrolyte polymère fluoré selon l'une quelconque des revendications 1 à 3, le film microporeux ayant un module d'élasticité dans l'une au moins des directions MD et TD de 250 MPa ou moins.

5. Membrane à électrolyte polymère fluoré selon l'une quelconque des revendications 1 à 4, le film microporeux étant constitué de polyéthylène.

6. Membrane à électrolyte polymère fluoré selon l'une quelconque des revendications 1 à 5, l'électrolyte polymère fluoré ayant une teneur en eau de 30 % en masse à 300 % en masse à 80 °C.

7. Ensemble membrane-électrodes (EME) comprenant la membrane à électrolyte polymère fluoré selon l'une quelconque des revendications 1 à 6.

8. Pile à combustible comprenant la membrane à électrolyte polymère fluoré selon l'une quelconque des revendications 1 à 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5075835 B
- JP 7068377 B
- JP 2001503909 A
- WO 2007013532 A
- WO 2008072673 A
- JP 2232242 A
- JP 2009051226 A

**Non-patent literature cited in the description**

- **K. HU ; T. XU ; W. YANG ; Y. FU.** *Journal of Applied Polymer Science,* vol. 91
- **E. MONTONERI.** *Journal of Polymer Science: Part A: Polymer Chemistry,* 1989, vol. 27, 3043-3051